# EUROPEAN PATENT APPLICATION

(11) **EP 4 841 446 A1**
(43) Date of publication of application: **18.11.2026**
(21) Application number: 24921414.9
(22) Date of filing: 05.09.2024
(51) Int. Cl.: G06F 11/10

(54) **DATA PROCESSING METHOD AND DATABASE SYSTEM**

(30) Priority: 31.01.2024 CN 202410144719
(71) Applicant: Huawei Technologies Co., Ltd., Shenzhen, Guangdong 518129 (CN)
(72) Inventor: ZHANG, Qiong, Shenzhen, Guangdong 518129 (CN); LIU, Wenxin, Shenzhen, Guangdong 518129 (CN); YAO, Geyong, Shenzhen, Guangdong 518129 (CN); ZHOU, Zelong, Shenzhen, Guangdong 518129 (CN)
(74) Representative: Goddar, Heinz J.
(86) International application number: PCT/CN2024/117015
(87) International publication number: WO 2025/161389

(57) **Abstract**

Embodiments of this application provide a data processing method. The method includes: obtaining a first read request, where the first read request indicates to read data of a first page; obtaining a first version identifier and a second version identifier of the first page based on the first read request, where the first version identifier indicates a version of the first page that has been persistently stored in the storage, and the second version identifier indicates a latest version of the first page before the first page is persistently stored in the storage; and verifying, by the controller, the first page based on a relationship between the first version identifier and the second version identifier. In this application, a page in the storage can be accurately verified.

## Description

This application claims priority to Chinese Patent Application No. 202410144719.6, filed with the China National Intellectual Property Administration on January 31, 2024 and entitled "DATA PROCESSING METHOD AND DATABASE SYSTEM", which is incorporated herein by reference in its entirety.

### TECHNICAL FIELD

This application relates to the field of database technologies, and specifically, to a data processing method, a database system, and an apparatus.

### BACKGROUND

Data in a relational database is usually stored in an underlying storage (a non-volatile storage medium). There is a probability that a failure occurs during a persistent write process to the storage. Consequently, a loss of data page versions may occur. In other words, the latest version of data pages is not stored in the underlying storage, and an older version of data is returned when the data pages are read from the storage again. During database operation, once the data page versions are lost, continuing to perform updates based on incorrect data pages causes the incorrect data to propagate, resulting in a loss of some data and compromising reliability of the database.

Therefore, a method for verifying a version of a data page is urgently needed to ensure that the version of the data page is correct.

### SUMMARY

According to a first aspect, this application provides a data processing method. In the method, a controller of a storage system obtains a first read request, where the first read request indicates to read data of a first page, and obtains a first version identifier and a second version identifier of the first page based on the first read request, where the first version identifier indicates a version of the first page that has been persistently stored in the storage, and the second version identifier indicates a latest version of the first page before the first page is persistently stored in the storage; and the controller verifies the first page based on a relationship between the first version identifier and the second version identifier.

In a possible implementation, the controller may obtain the version (that is, the version indicated by the first version identifier) of the first page that has been persistently stored in the storage. However, when the first page is written into the storage, a writing failure may occur. In this case, the version of the first page that has been persistently stored is not the latest version. In other words, the first page of a version A (the latest version) should be written into the storage. However, an error occurs in a writing process. In this case, the version of the first page stored in the storage is not the version A, but a version earlier than the version A (for example, a version B). If the version verification is not performed, but data of the version B is directly read, an error occurs. In this embodiment of this application, the storage system further maintains a latest version of a page before the page is persistently stored in the storage. The latest version is a version of the page that should be persistently stored in the storage when no error occurs in a writing process. For example, the page is the first page. When reading the first page, the controller may first obtain the version (that is, the first version identifier) of the first page that has been persistently stored in the storage, obtain the latest version (that is, the second version identifier) of the first page before the first page is persistently stored in the storage, and perform the version verification on the first page based on the relationship, namely, the relationship between the first version identifier and the second version identifier, where the relationship between the first version identifier and the second version identifier may indicate a relationship between a page version actually stored in the current storage and an ideal correct version. When the page version actually stored in the storage is the ideal correct version, it may be considered that the verification succeeds. When the page version actually stored in the storage is not the ideal correct version, it may be considered that the verification fails. In the foregoing manner, the page in the storage can be accurately verified.

In a possible implementation, when obtaining the second version identifier, the controller of the storage system may obtain the first version identifier of the first page, and obtain the second version identifier corresponding to the first page from a mapping relationship, where the mapping relationship includes correspondences between a plurality of pages and latest versions of all the pages before the pages are persistently stored in the storage.

In a possible implementation, the controller of the storage system determines, when the relationship between the first version identifier and the second version identifier does not meet a preset condition, that the version verification on the first page fails; or determines, when the relationship between the first version identifier and the second version identifier meets the preset condition, that the version verification on the first page succeeds.

In a possible implementation, the controller and the storage correspond to a primary device, the storage system further includes a standby device, and upon determining that the version verification on the first page fails, the controller of the storage system further switches the primary device to a standby device, and triggers switching of the standby device to a primary device.

To detect a data page version loss during database operation in a timely manner, in this application, page version verification information (that is, the mapping relationship in this embodiment of this application) is maintained in a memory, version information is recorded when a page is flushed, and information is verified when the page is read. A response speed is fast, and a page flushed each time may have a previous-version problem. A page that may have an error is recorded and verified, so that a version error can be detected in a timely manner. In addition, for the detected page version loss, some measures need to be taken to resolve this problem and prevent spread of incorrect data, and a version verification rule is formulated. For operations in which the verification fails, a process exits and a primary/standby switchover is performed. Once a version error is detected, the primary/standby switchover is triggered immediately. A node with the version error is no longer used as a primary node, which can prevent spread of the incorrect data.

In a possible implementation, the first version identifier includes a first log sequence number (lsn), and the second version identifier includes a second log sequence number; and the determining, when the relationship between the first version identifier and the second version identifier does not meet the preset condition, that the version verification on the first page fails includes: when the first log sequence number is different from the second log sequence number, determining that the version verification on the first page fails.

In a possible implementation, the method further includes: upon determining that the version verification on the first page fails, triggering alarm information, and reading the first page in the storage.

In a possible implementation, the first version identifier includes the first log sequence number and a first cyclic redundancy check (crc), and the second version identifier includes the second log sequence number and a second cyclic redundancy check; and the determining, when the relationship between the first version identifier and the second version identifier does not meet the preset condition, that the version verification on the first page fails includes: when the first log sequence number is the same as the second log sequence number, and the first cyclic redundancy check is different from the second cyclic redundancy check, determining that the version verification on the first page fails.

The lsn may indicate a version of a data body of a page number. When lsns are the same, data bodies of page numbers may be the same. In this case, data reading may be performed (because read data is correct). When lsns are different, it may be considered that the version of the data body of the page number in the storage is incorrect. In this case, data reading is not performed. In addition, when the lsns are the same, other data such as data headers on the page numbers may be different. Therefore, whether data of the page numbers is completely the same may also be determined by comparing crcs. When the crcs are different, an alarm may be generated, but data reading is not affected.

In a possible implementation, the method further includes: upon determining that the version verification on the first page succeeds, reading the first page in the storage.

In a possible implementation, the method further includes: upon determining that the version verification on the first page succeeds, deleting a correspondence between the first page and the second version identifier from the mapping relationship.

In a possible implementation, before the obtaining the first read request, the method further includes:
before performing an operation of writing the first page of the version corresponding to the second version identifier into the storage, writing the correspondence between the first page and the second version identifier into the mapping relationship.

In a possible implementation, the first read request includes a page identifier of the first page, and the mapping relationship includes correspondences between page identifiers of the plurality of pages and the latest versions of all the pages before the pages are persistently stored in the storage.

In a possible implementation, the obtaining the second version identifier corresponding to the first page from the mapping relationship includes:
obtaining the second version identifier corresponding to the first page from the mapping relationship stored in a memory.

In a possible implementation, the method further includes: obtaining a second read request, where the second read request indicates to read data of a second page; and when the mapping relationship does not include a version identifier corresponding to the second page, determining that version verification on the second page succeeds.

When the mapping relationship does not include related information of a to-be-read page, it is equivalent to saying that verification has been completed previously and the verification succeeds, and no new-version data is written subsequently. In this case, it may be considered that the version verification on the page succeeds. For example, the second read request may be obtained, where the second read request indicates to read the data of the second page. When the mapping relationship does not include the version identifier corresponding to the second page, it is determined that the version verification on the second page succeeds.

According to a second aspect, this application provides a data processing apparatus. The apparatus includes:
an obtaining module, configured to obtain a first read request, where the first read request indicates to read data of a first page; and
a processing module, configured to obtain a first version identifier and a second version identifier of the first page based on the first read request, where the first version identifier indicates a version of the first page that has been persistently stored in the storage, and the second version identifier indicates a latest version of the first page before the first page is persistently stored in the storage; and verify the first page based on a relationship between the first version identifier and the second version identifier.

In a possible implementation, the processing module is specifically configured to:
obtain the first version identifier of the first page, and obtain the second version identifier corresponding to the first page from a mapping relationship, where the mapping relationship includes correspondences between a plurality of pages and latest versions of all the pages before the pages are persistently stored in the storage.

In a possible implementation, the processing module is specifically configured to:
determine, when the relationship between the first version identifier and the second version identifier does not meet a preset condition, that the version verification on the first page fails; or
determine, when the relationship between the first version identifier and the second version identifier meets the preset condition, that the version verification on the first page succeeds.

In a possible implementation, the controller and the storage correspond to a primary device, the storage system further includes a standby device, and the processing module is further configured to:
upon determining that the version verification on the first page fails, switch the primary device to a standby device, and trigger switching of the standby device to a primary device.

In a possible implementation, the first version identifier includes a first log sequence number (lsn), and the second version identifier includes a second log sequence number; and when the first log sequence number is different from the second log sequence number, the version verification on the first page fails.

In a possible implementation, the processing module is further configured to:
upon determining that the version verification on the first page fails, trigger alarm information, and read the first page in the storage.

In a possible implementation, the first version identifier includes the first log sequence number and a first cyclic redundancy check (crc), and the second version identifier includes the second log sequence number and a second cyclic redundancy check; and the processing module is specifically configured to:
when the first log sequence number is the same as the second log sequence number, and the first cyclic redundancy check is different from the second cyclic redundancy check, determine that the version verification on the first page fails.

In a possible implementation, the processing module is further configured to:
upon determining that the version verification on the first page succeeds, read the first page in the storage.

In a possible implementation, the processing module is further configured to:
upon determining that the version verification on the first page succeeds, delete a correspondence between the first page and the second version identifier from the mapping relationship.

In a possible implementation, the processing module is further configured to:
before performing an operation of writing the first page of the version corresponding to the second version identifier into the storage, write the correspondence between the first page and the second version identifier into the mapping relationship.

In a possible implementation, the first read request includes a page identifier of the first page, and the mapping relationship includes correspondences between page identifiers of the plurality of pages and the latest versions of all the pages before the pages are persistently stored in the storage.

In a possible implementation, the processing module is specifically configured to:
obtain the second version identifier corresponding to the first page from the mapping relationship stored in a memory.

In a possible implementation, the obtaining module is further configured to obtain a second read request, where the second read request indicates to read data of a second page.

The processing module is further configured to:
when the mapping relationship does not include a version identifier corresponding to the second page, determine that version verification on the second page succeeds.

According to a third aspect of this application, a data processing apparatus is provided. The apparatus may include at least one processor, a storage, and a communication interface. The processor is coupled to the storage and the communication interface. The storage is configured to store instructions, the processor is configured to execute the instructions, and the communication interface is configured to communicate with another network element under control of the processor. When the instructions are executed by the processor, the processor is enabled to perform the method in any possible implementation of the first aspect.

According to a fourth aspect of this application, a computer-readable storage medium is provided. The computer-readable storage medium stores a program, and the program enables a processor to perform any data processing method in the first aspect and the implementations of the first aspect.

According to a fifth aspect of this application, a computer program product is provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, to enable the device to implement the method provided in any one of the first aspect or the possible implementations of the first aspect.

According to a sixth aspect of this application, a chip system is provided. The chip system includes a processor, configured to support a data processing apparatus in implementing a function in any one of the first aspect or the possible implementations of the first aspect. In a possible design, the chip system may further include a storage. The storage is configured to store program instructions and data that are necessary for the transaction management apparatus. The chip system may include a chip, or may include a chip and another discrete component.

### BRIEF DESCRIPTION OF DRAWINGS

FIG. 1A to FIG. 1D are diagrams of an application framework according to this application;
FIG. 2A and FIG. 2B are diagrams of an application framework according to this application;
FIG. 3 is a schematic flowchart of a data processing method according to an embodiment of this application;
FIG. 4, FIG. 5, and FIG. 7 each are a schematic flowchart of a data processing method according to an embodiment of this application;
FIG. 6 is a diagram of an application example according to an embodiment of this application; and
FIG. 8 to FIG. 10 each are a diagram of a structure of a data processing apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data used in such a way is interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes related terms in embodiments of this application.

Redo log: physical log of a database, also referred to as XLog in the database product. The redo log records physical modifications of data pages and is used to restore physical pages that have been committed.

Primary node: a primary node of the database, which accepts write requests and generates logs.

Standby node: a standby node of the database (that is, a standby node), which is a copy of the primary node, receives logs and performs log replay to ensure data consistency between the primary node and the standby node.

Buffer pool: a memory buffer in the database, used to store recently accessed data blocks to accelerate data access.

Checkpoint: a checkpoint mechanism in which a buffer is periodically updated to a disk and a location of logs that have been written into the disk in the database is recorded. When a database system crashes or recovers from a fault, the database is restored from the location.

Dirty page flushing: Dirty pages (pages that have been modified but have not yet been written back to the disk) in the memory are written back to the disk to ensure data consistency and durability.

Log sequence number: Each record in a transaction log may be identified by a unique log sequence number (log sequence number, LSN). LSNs are ordered in this way: If an LSN2 is greater than an LSN1, a modification described by a log record identified by the LSN2 occurs after a modification described by the log record LSN1.

Cyclic redundancy check: The cyclic redundancy check (cyclic redundancy check, CRC) is a hash function mainly used to detect or check errors that may occur after data transmission or storage. A generated number is calculated and appended to data before transmission or storage. Then, a receiver performs a check to determine whether the data has changed. Generally, a value of the cyclic redundancy check is a 32-bit integer.

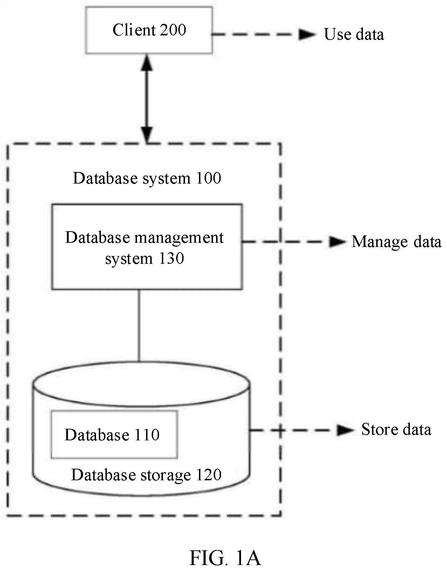

A method provided in embodiments of this application may be applied to a database system (database system). FIG. 1A shows a typical logical architecture of a database system. According to FIG. 1A, the database system 100 includes a database 110 and a database management system (database management system, DBMS) 130.

The database 110 is an organized data set stored in a data storage (data storage) 120, that is, an associated data set organized, stored, and used based on a specific data model. Based on different data models used for organizing data, data may be classified into a plurality of types, such as relational data (relational data), graph (graph) data, and time series (time series) data. The relational data is data modeled by using a relational model, and is usually represented as a table, where a row in the table represents a set of associated values of an object or an entity. The graph data, "graph" for short, represents a relationship, for example, a social relationship, between objects or entities. The time series data, time series data for short, is a data column recorded and indexed in a time sequence, and is used to describe status changes of an object over time.

The database management system 130 is a core of the database system, and is system software used to organize, store, and maintain data. A client 200 may access the database 110 by using the database management system 130, and a database administrator also maintains the database by using the database management system. The database management system 130 provides a plurality of functions for the client 200 to establish, modify, and query the database, where the client 200 may be an application or user equipment. The functions provided by the database management system 130 may include but are not limited to the following items: (1) Data definition function: The database management system 130 provides a data definition language (data definition language, DDL) to define a structure of the database 110, where the DDL is used to depict a database framework, and may be stored in a data dictionary. (2) Data access function: The database management system 130 provides a data manipulation language (data manipulation language, DML) to implement basic access operations on the database 110, for example, retrieval, insertion, modification, and deletion. (3) Database operation management function: The database management system 130 provides a data control function to effectively control and manage operating of the database 110, to ensure correct and effective data. (4) Database establishment and maintenance functions: include functions such as loading of initial data of the database, dump, restoration, and reorganization of the database, and monitoring and analysis of system performance. (5) Transmission of the database: The database management system provides transmission of processed data, to implement communication between the client and the database management system, which is usually completed in coordination with an operating system.

The data storage 120 includes but is not limited to a solid state drive (solid state drive, SSD), a disk array, cloud storage, or another type of non-transitory computer-readable storage medium. A person skilled in the art may understand that a database system may include components more or less than those shown in FIG. 1A, or include components different from those shown in FIG. 1A. FIG. 1A merely shows components more related to implementations disclosed in embodiments of the present invention.

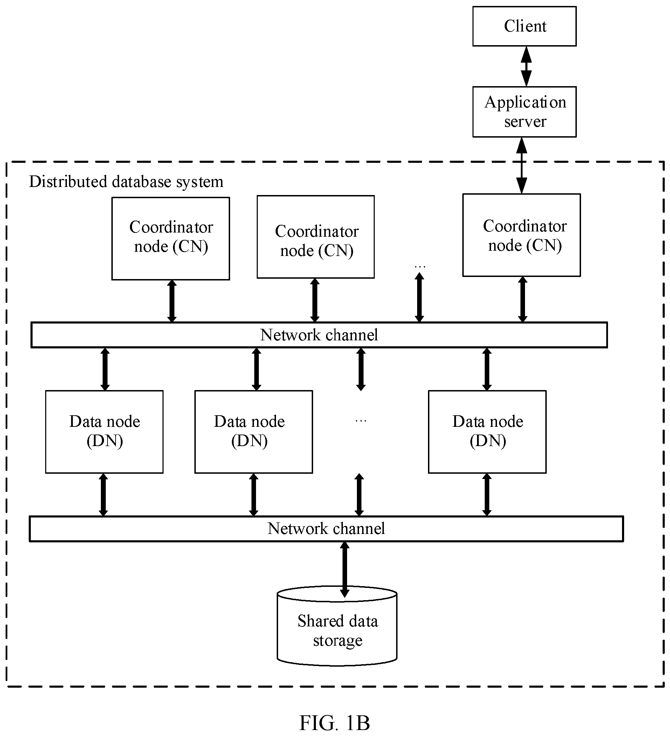

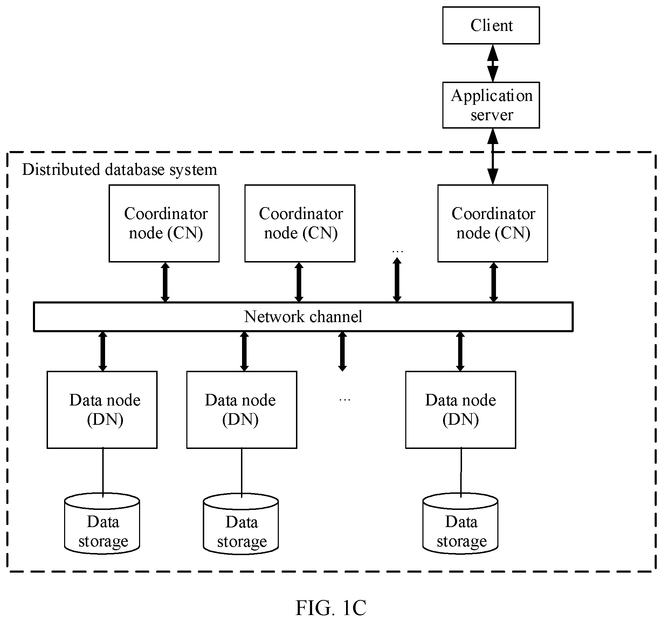

The database system provided in this embodiment of this application may be a distributed database system (distributed database system, DDBS). In a process of processing transactions, to implement concurrency control between the transactions, a global transaction manager (global transaction management, GTM) is usually used to manage the transactions in the DDBS. The following describes the DDBS with reference to FIG. 1B and FIG. 1C.

FIG. 1B is a diagram of a distributed database system using a shared-storage (shared-storage) architecture, including one or more coordinator nodes (coordinator node, CN), a plurality of data nodes (data node, DN), and one or more GTMs (for example, a first GTM and a second GTM in FIG. 1B). The first GTM is used as a primary GTM, and the second GTM is configured to back up data of the first GTM. When the first GTM is faulty, the second GTM takes over work of the first GTM. In this way, high reliability of the DDBS can be ensured. The CN and the DN communicate with each other through a network channel. In an embodiment, the network channel may include network devices such as a switch, a router, and a gateway. The CN, the DN, and the GTM jointly implement functions of a database management system, and provide services such as database retrieval, insertion, modification, and deletion for a client. In an embodiment, a database management system is deployed on each CN, DN, and GTM. A shared data storage stores data that can be shared by a plurality of DNs, and the DNs can perform read and write operations on the data in the data storage through a network channel. The shared data storage may be a shared disk array. The CN, the DN, the first GTM, or the second GTM in the distributed database system may be a physical machine, for example, a database server, or may be a virtual machine (virtual machine, VM) or a container (container) running on an abstract hardware resource. In an embodiment, the CN, the DN, the first GTM, or the second GTM is a virtual machine or a container, the network channel is a virtual switched network, and the virtual switched network includes a virtual switch. The database management system deployed in the CN, the DN, the first GTM, or the second GTM is a DBMS instance (instance), and the DBMS instance may be a process or a thread. These DBMSs cooperate to implement functions of the database relational system. In another embodiment, the CN, the DN, the first GTM, or the second GTM is a physical machine, the network channel includes one or more switches, and the switch is a storage area network (storage area network, SAN) switch, an Ethernet switch, a fiber channel switch, or another physical switching device.

FIG. 1C is a diagram of a distributed database system using a shared-nothing (shared-nothing) architecture. Each DN has an exclusive hardware resource (such as a data storage), operating system, and database. The CN, the DN, the first GTM, or the second GTM communicates with each other through a network channel. For understanding of the network channel, refer to the corresponding descriptions in FIG. 1B. In the system, data is distributed to the DNs based on a database model and an application characteristic. A query task is divided by CNs into several parts, to be executed in parallel on all the DNs. The DNs perform calculation coordinately and are used as a whole to provide a database service. All communication functions are implemented on a high-bandwidth network interconnection system. Like the distributed database system of the shared-storage architecture described in FIG. 1B, the CN, the DN, the first GTM, or the second GTM herein may be a physical machine or a virtual machine.

In all embodiments of this application, a data storage (data storage) of the database system includes but is not limited to a solid state drive (solid state drive, SSD), a disk array, or another type of non-transitory computer-readable medium. Although a database is not shown in FIG. 1B and FIG. 1C, it should be understood that the database is stored in the data storage. A person skilled in the art may understand that the database system may include components more or less than those shown in FIG. 1A to FIG. 1C, or include components different from those shown in FIG. 1A to FIG. 1C. FIG. 1A to FIG. 1C merely show components more related to implementations disclosed in the embodiments of this application. However, a person skilled in the art may understand that a distributed database system may include any quantities of CNs and DNs. Database management system functions of CNs and DNs may be separately implemented by using an appropriate combination of software, hardware, and/or firmware on the CNs and DNs.

The distributed database system described in FIG. 1B and FIG. 1C includes a plurality of DNs and a plurality of CNs. Functions of all the DNs are basically the same, and functions of all the CNs are also basically the same.

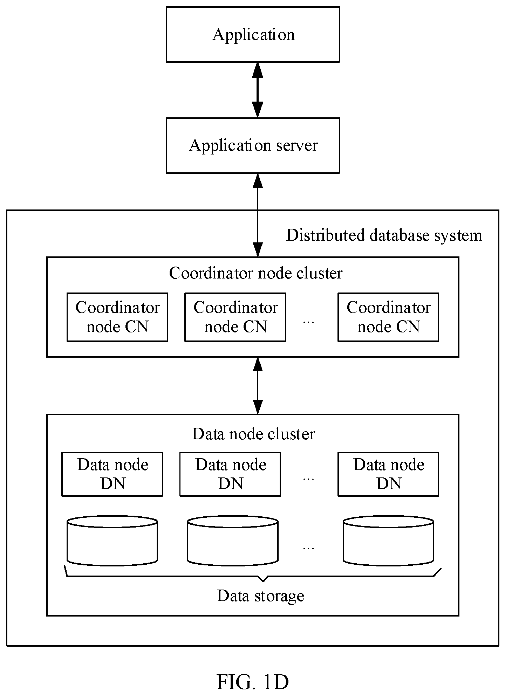

FIG. 1D shows an application data management system according to an embodiment of this application. Specifically, as shown in the figure, a data node cluster may include a plurality of data nodes DNs. An application developer may deploy related data of a developed application in a corresponding data node DN. The application may send a service request to the application server, and the application server may convert the service request into a data operation request. The application server may send the data operation request to a distributed database system. Further, one or more data nodes DNs in the distributed database system perform, on data in a database storage, an operation corresponding to the operation request. Specifically, the application server may send the data operation request to a coordinator node in a coordinator node cluster, the coordinator node further forwards the operation request to a related DN, and the related DN performs a data operation corresponding to the operation request.

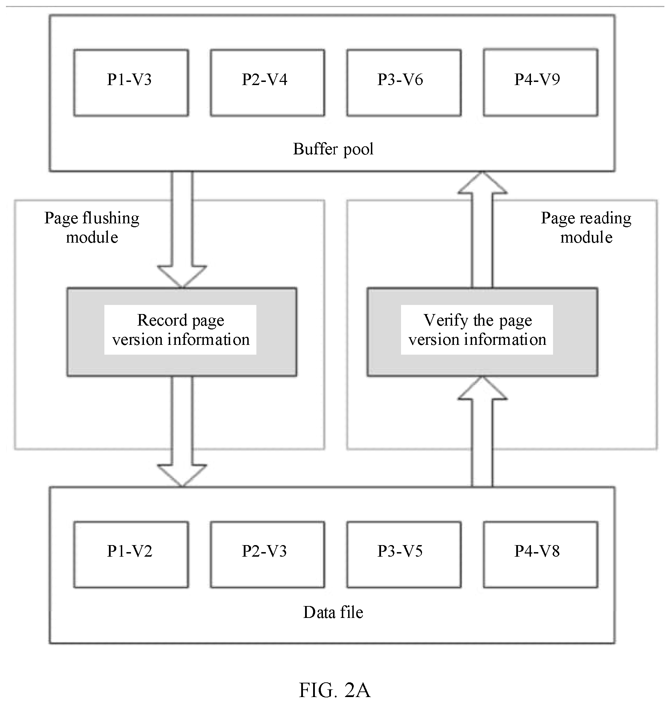

FIG. 2A is a diagram of a system architecture according to an embodiment of this application. The system architecture includes one or more coordinator nodes (CN) and a plurality of data nodes (DN). The CN receives an SQL statement that carries a subquery and is sent by a user, generates, based on distribution information of a parent query and a subquery in the query statement, an execution plan for predicate pushdown, and delivers the plan to the data node DN. On the DN, for the subquery, when base table data is scanned, a predicate condition filtering operation is performed synchronously. Only data that meets a predicate condition is transferred to an upper-layer operator. The same applies to the parent query. Finally, the DN returns the data to a gather operator of the CN. After receiving the data, the CN returns a result to the user.

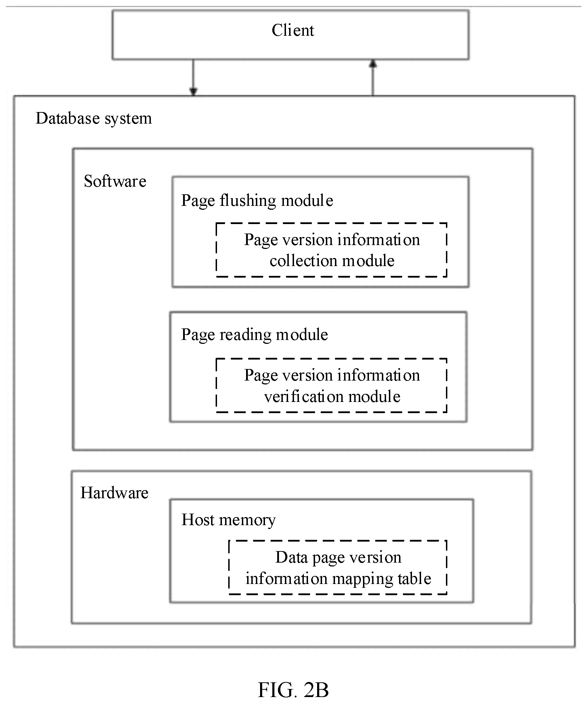

FIG. 2B is a diagram of a system architecture according to an embodiment of this application. This application may be program code that is included in a distributed database and deployed on a server. The application scenario shown in FIG. 2B is used as an example. The program code of this application exists in a coordinator node CN of the distributed database, a database parser of a data node DN, an optimizer, and an executor. Base table data is stored on different DNs based on a distribution key of a base table by using a distribution algorithm. As shown in FIG. 2B, a user sends, on the CN, an SQL statement that carries a subquery. The CN is responsible for parsing and checking a user input statement, generating an execution plan, connecting to the DN through a network, sending data and instructions to the DN, and finally summarizing statistics of the DN. The DN is responsible for a specific execution process of the execution plan. Except for stored data, DNs have a same architecture and support various different data distribution manners. The CN may be selected by using an election algorithm or use a different architecture from the DN. There may be a plurality of CNs based on specific deployment of the distributed database. Modules of the database are equally deployed on the CN and the DNs, and a role of a node in the distributed database is set through a configuration file.

Data in a relational database is usually stored in an underlying storage (a non-volatile storage medium). There is a probability that a failure occurs during a persistent write process to the storage. Consequently, a loss of data page versions may occur. In other words, the latest version of data pages is not stored in the underlying storage, and an older version of data is returned when the data pages are read from the storage again. During database operation, once the data page versions are lost, continuing to perform updates based on incorrect data pages causes the incorrect data to propagate, resulting in a loss of some data and compromising reliability of the database.

Therefore, a method for verifying a version of a data page is urgently needed to ensure that the version of the data page is correct.

To resolve a problem of a page version loss during database operation, in the conventional technology, an lsn record of a page is added to a redo log, and when a standby node replays a log, whether the log matches the page lsn of the generated log is verified. Although this method can detect a data page version error during log replay, the method still has the following disadvantages: During normal database operation, a replay operation is performed only on the standby node. Therefore, the method can be used to verify a page version only on the standby node, and is not applicable to the primary node. In addition, logs on a standby device are generated by a primary device and synchronized to the standby device. Therefore, when an error is detected on the standby device, it indicates that logs generated on the primary device have exceeded the faulty logs. That is, the primary device may have generated incorrect data for a user.

FIG. 2A is an example diagram of an application scenario according to this application. As shown in FIG. 2A, during normal operation of a database, a data page generated by the database is first buffered in a buffer pool, and is actually written into a storage for persistence only in a scenario in which checkpoint advancement is performed or the data page is swapped in and out because the buffer pool is full. Each data page has a fixed number. When data is read, an attempt to obtain a page from the buffer pool is first made. If the page does not exist, the page is obtained from a storage system.

The storage system includes software modules: data page flushing and reading modules, where newly added modules (or modules that optimize an existing model) in this application may implement a version information collection mechanism during page flushing and a version verification mechanism during page reading.

The storage system includes hardware modules: a memory and an underlying storage, where the newly added modules (or modules that optimize the existing model) in this application may implement maintenance of a memory structure page version information mapping table.

Functions of the modules are as follows: The page flushing module collects data page version information, the page reading module implements a mechanism for verifying the data page version information, and the page version information mapping table buffers the collected page version information.

A logical relationship between software and hardware is as follows: Before writing a data page from the buffer pool to a storage device, a database node needs to first record a correspondence between a page identifier of a flushed page and version information of the flushed page to the page version information mapping table. When obtaining the data page from the storage system, the database node verifies a page version based on the page version information mapping table, and an operation can be continued only after the verification succeeds.

FIG. 2B is an example diagram of an application scenario according to this application. As shown in FIG. 2B, embodiments of this application may be in a form of program code included in a database kernel, and may be invoked and executed by a controller. The application scenario shown in FIG. 2A is used as an example. The code corresponding to embodiments of this application may exist in the data page flushing and reading modules. During running, the code corresponding to embodiments of this application runs in a host memory of a server. FIG. 2B shows an implementation form of embodiments of this application in the server and platform software. A portion indicated by a dashed box represents the modules newly added to the existing platform software in embodiments of this application. In the data page flushing module, a page version information collection module is provided in embodiments of this application. In the database page reading module, a page version information verification module is provided in embodiments of this application. In the host memory, a data page version information mapping table buffer is allocated in embodiments of this application.

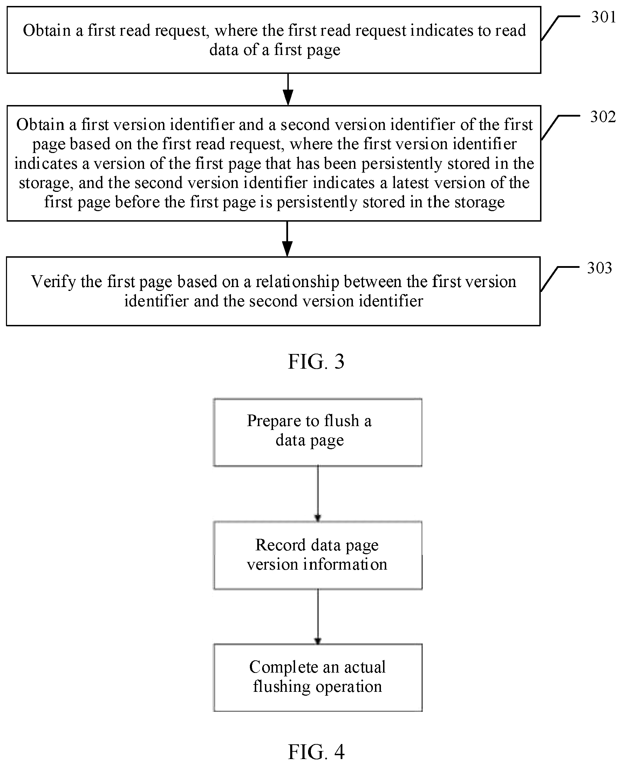

An embodiment of this application provides a data processing method. FIG. 3 is a schematic flowchart of a data processing method according to an embodiment of this application. The method includes the following steps.

301: Obtain a first read request, where the first read request indicates to read data of a first page.

The embodiment corresponding to FIG. 3 may be applied to a primary device.

In a possible implementation, pages are a plurality of pages into which data of a table corresponding to a database instance is divided, each page stores data of a plurality of rows or a plurality of columns, and an operation performed by a user on the table is converted into an operation performed on the page. Specifically, the user may access (for example, read, write, or read and write) data in a database. A controller may generate a read request based on an access request of the user. The read request may indicate to read the data of the first page, and the read request may include a page identifier of the first page.

302: Obtain a first version identifier and a second version identifier of the first page based on the first read request, where the first version identifier indicates a version of the first page that has been persistently stored in the storage, and the second version identifier indicates a latest version of the first page before the first page is persistently stored in the storage.

When data is read, an attempt to obtain a page from a buffer pool may be first made. If the page does not exist, the page is obtained from an underlying storage, and version correctness of the data page obtained from the underlying storage needs to be verified.

In a possible implementation, the controller may obtain the version (that is, the version indicated by the first version identifier) of the first page that has been persistently stored in the storage. However, when the first page is written into the storage, a writing failure may occur. In this case, the version of the first page that has been persistently stored is not the latest version. In other words, the first page of a version A (the latest version) should be written into the storage. However, an error occurs in a writing process. In this case, the version of the first page stored in the storage is not the version A, but a version earlier than the version A (for example, a version B). If the version verification is not performed, but data of the version B is directly read, an error occurs. In this embodiment of this application, the storage system further maintains a latest version of a page before the page is persistently stored in the storage. The latest version is a version of the page that should be persistently stored in the storage when no error occurs in a writing process. For example, the page is the first page. When reading the first page, the controller may first obtain the version (that is, the first version identifier) of the first page that has been persistently stored in the storage, obtain the latest version (that is, the second version identifier) of the first page before the first page is persistently stored in the storage, perform the version verification on the first page based on the relationship between the first version identifier and the second version identifier, and determine, by using a version verification result, whether to read the first page, or perform another operation such as an alarm. The relationship between the first version identifier and the second version identifier may indicate a relationship between a page version actually stored in the current storage and an ideal correct version. Therefore, the version verification may be performed on the first page based on the relationship. When the page version actually stored in the storage is the ideal correct version, it may be considered that the verification succeeds. When the page version actually stored in the storage is not the ideal correct version, it may be considered that the verification fails. In the foregoing manner, the page in the storage can be accurately verified.

The second version identifier may be stored in a mapping relationship, graph information, or other information.

In a possible implementation, the second version identifier corresponding to the first page may be obtained from the mapping relationship, where the mapping relationship includes correspondences between a plurality of pages and latest versions of all the pages before the pages are persistently stored in the storage.

The mapping relationship may be stored in a memory, and further the second version identifier corresponding to the target page may be obtained from the mapping relationship stored in the memory.

In a possible implementation, the mapping relationship includes correspondences between page identifiers and version identifiers of the plurality of pages, and a version identifier in the mapping relationship is a latest version of each page before the page is persistently stored in the storage.

The first page is used as an example. Before an operation of writing the first page of the version corresponding to the second version identifier into the storage is performed, a correspondence between the first page (for example, the page identifier of the first page) and the second version identifier may be written into the mapping relationship.

For example, with reference to FIG. 4, a dirty page flushing operation is performed during operation of a database system. For example, page flushing is triggered in the following two scenarios: Scenario (a): A data page is swapped in and out because the buffer pool is full, and a cold data page is written into a disk. Scenario (b): Checkpoint advancement is performed periodically, and a data page is written into the disk while the page still remains in the buffer pool. Version information of all flushed pages needs to be collected. For example, if the first page of the version corresponding to the second version identifier is a current page being flushed, version information (that is, the second version identifier) may be collected, and a key-value pair formed by the page identifier of the first page and the version information of the first page is used as a tuple, and is recorded in a data page version information mapping table (that is, the mapping relationship in this embodiment of this application) maintained in the memory. If the version information of the first page already exists in the table, the tuple is updated to a latest version record.

After the correspondence between the first page (for example, the page identifier of the first page) and the second version identifier is written into the mapping relationship, an operation of writing the first page into the storage may be performed (the writing operation may succeed or may fail).

303: Verify the first page based on a relationship between the first version identifier and the second version identifier.

In a possible implementation, when the relationship between the first version identifier and the second version identifier does not meet a preset condition, it may be determined that the version verification on the first page fails; or when the relationship between the first version identifier and the second version identifier meets the preset condition, it may be determined that the version verification on the first page succeeds.

For example, it may be determined, by determining whether the first version identifier is the same as the second version identifier, that the version verification on the first page succeeds or fails.

The following first describes how to verify the first page based on the relationship between the first version identifier and the second version identifier.

In a possible implementation, the first version identifier includes a first log sequence number (lsn), and the second version identifier includes a second log sequence number; and when the first log sequence number is different from the second log sequence number, it may be determined that the version verification on the first page fails.

In a possible implementation, the first version identifier includes the first log sequence number and a first cyclic redundancy check (crc), and the second version identifier includes the second log sequence number and a second cyclic redundancy check; and when the first log sequence number is the same as the second log sequence number, and the first cyclic redundancy check is different from the second cyclic redundancy check, it may be determined that the version verification on the first page fails.

The lsn may indicate a version of a data body of a page number. When lsns are the same, data bodies of page numbers may be the same. In this case, data reading may be performed (because read data is correct). When lsns are different, it may be considered that the version of the data body of the page number in the storage is incorrect. In this case, data reading is not performed. In addition, when the lsns are the same, other data such as data headers on the page numbers may be different. Therefore, whether data of the page numbers is completely the same may also be determined by comparing crcs. When the crcs are different, an alarm may be generated, but data reading is not affected.

In a possible implementation, when the first version identifier is the same as the second version identifier, it may be determined that the version verification on the first page succeeds. When it is determined that the version verification on the first page succeeds, the first page in the storage may be read. Optionally, the correspondence between the first page and the second version identifier may be deleted from the mapping relationship.

Because it is determined that the version verification on the first page succeeds, the correspondence between the first page and the second version identifier may be deleted from the mapping relationship, to reduce storage overheads.

It should be understood that when the mapping relationship does not include related information of a to-be-read page, it is equivalent to saying that verification has been completed previously and the verification succeeds, and no new-version data is written subsequently. In this case, it may be considered that the version verification on the page succeeds. For example, the second read request may be obtained, where the second read request indicates to read the data of the second page. When the mapping relationship does not include the version identifier corresponding to the second page, it is determined that the version verification on the second page succeeds.

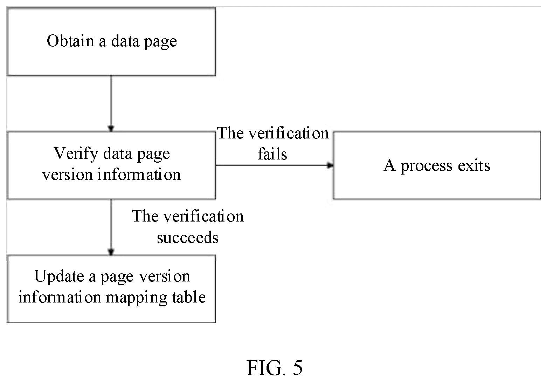

For example, FIG. 5 is a diagram of a verification process.

In a possible implementation, the controller and the storage correspond to the primary device, the storage system further includes a standby device, and when it is determined that the version verification on the first page fails (for example, it is determined that the lsns are different), the primary device may be switched to a standby device and switching of the standby device to a primary device may be triggered.

In a possible implementation, when it is determined that the version verification on the first page fails, alarm information may be triggered, and the first page in the storage may be read (for example, when it is determined that the lsns are the same but the crcs are different).

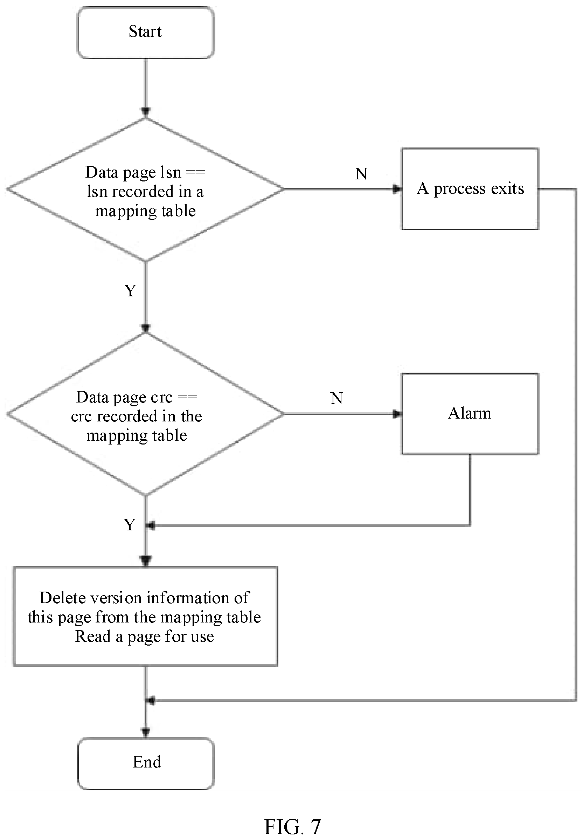

Refer to FIG. 7. An example in which the version identifier includes the lsn and the crc is used, and a verification rule is as follows:
(1) Read page version lsn != lsn recorded in the mapping table. In this case, verification fails, the process exits, and a primary/standby switchover is performed.
(2) Read page version lsn == lsn recorded in the mapping table, page crc != crc in the verification information. In this case, verification fails, an alarm is generated, and data is read.
(3) Read page version lsn == lsn recorded in the mapping table, page crc == crc in the verification information. In this case, verification succeeds, the mapping table is locked, and the record is deleted.

"!=" indicates not equal to, and "==" indicates equal to.

Specifically, to detect a data page version loss during database operation in a timely manner, in this application, page version verification information (that is, the mapping relationship in this embodiment of this application) is maintained in a memory, version information is recorded when a page is flushed, and information is verified when the page is read. A response speed is fast, and a page flushed each time may have a previous-version problem. A page that may have an error is recorded and verified, so that a version error can be detected in a timely manner. In addition, for the detected page version loss, some measures need to be taken to resolve this problem and prevent spread of incorrect data, and a version verification rule is formulated. For operations in which the verification fails, a process exits and a primary/standby switchover is performed. Once a version error is detected, the primary/standby switchover is triggered immediately. A node with the version error is no longer used as a primary node, which can prevent spread of the incorrect data.

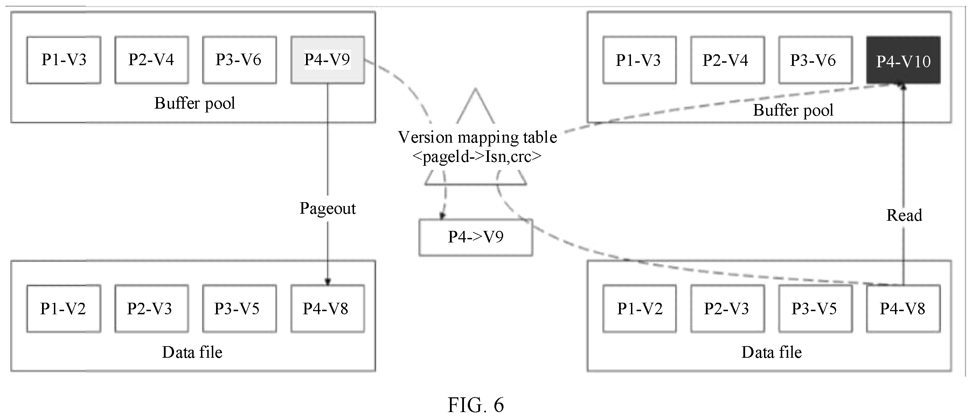

Refer to FIG. 6. For a page P4, when a flush operation is performed, the page P4 whose version is V9 in a buffer pool needs to be flushed to a data file. A correspondence between P4 and V9 (for example, a correspondence between an identifier of P4 and an lsn and a crc of P4 at version V9) may be recorded in a version mapping table, and an operation of flushing the page P4 at version V9 to the data file is performed. However, an error occurs in the flush process, resulting in a flush failure, and the version of the page P4 in the data file is V8. Before the page P4 at version V10 is written into the buffer pool, the page P4 in the data file needs to be read. Therefore, verification of the page P4 is required. The version of the page P4 in the data file (an lsn and a crc of P4 at version V9) and the lsn and the crc of the page P4 in the mapping table may be obtained. Because the lsn of the page P4 in the data file is different from the lsn of the page P4 in the mapping table, it may be considered that the verification fails.

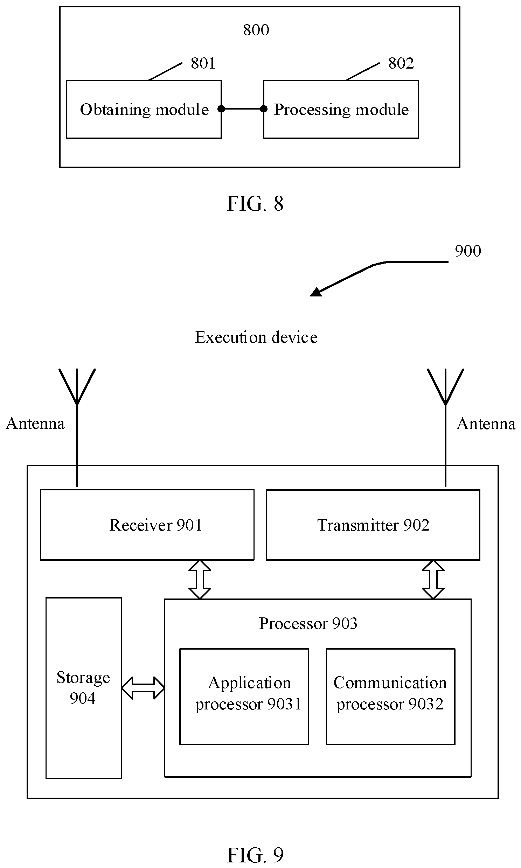

FIG. 8 is a diagram of a structure of a data processing apparatus according to an embodiment of this application. As shown in FIG. 8, the data processing apparatus 800 provided in this embodiment of this application includes:
An obtaining module 801 is configured to obtain a first read request, where the first read request indicates to read data of a first page.

For specific descriptions of the obtaining module 801, refer to the descriptions of step 301 in the foregoing embodiment. Details are not described herein again.

A processing module 802 is configured to obtain a first version identifier and a second version identifier of the first page based on the first read request, where the first version identifier indicates a version of the first page that has been persistently stored in the storage, and the second version identifier indicates a latest version of the first page before the first page is persistently stored in the storage; and verify the first page based on a relationship between the first version identifier and the second version identifier.

For specific descriptions of the processing module 802, refer to the descriptions of steps 302 and 303 in the foregoing embodiment. Details are not described herein again.

In a possible implementation, the processing module 802 is specifically configured to:
obtain the first version identifier of the first page, and obtain the second version identifier corresponding to the first page from a mapping relationship, where the mapping relationship includes correspondences between a plurality of pages and latest versions of all the pages before the pages are persistently stored in the storage.

In a possible implementation, the processing module 802 is specifically configured to:
determine, when the relationship between the first version identifier and the second version identifier does not meet a preset condition, that the version verification on the first page fails; or
determine, when the relationship between the first version identifier and the second version identifier meets the preset condition, that the version verification on the first page succeeds.

In a possible implementation, the controller and the storage correspond to a primary device, the storage system further includes a standby device, and the processing module 802 is further configured to:
upon determining that the version verification on the first page fails, switch the primary device to a standby device, and trigger switching of the standby device to a primary device.

In a possible implementation, the first version identifier includes a first log sequence number (lsn), and the second version identifier includes a second log sequence number; and when the first log sequence number is different from the second log sequence number, the version verification on the first page fails.

In a possible implementation, the processing module 802 is further configured to:
upon determining that the version verification on the first page fails, trigger alarm information, and read the first page in the storage.

In a possible implementation, the first version identifier includes the first log sequence number and a first cyclic redundancy check (crc), and the second version identifier includes the second log sequence number and a second cyclic redundancy check; and the processing module 802 is specifically configured to:
when the first log sequence number is the same as the second log sequence number, and the first cyclic redundancy check is different from the second cyclic redundancy check, determine that the version verification on the first page fails.

In a possible implementation, the processing module 802 is further configured to:
upon determining that the version verification on the first page succeeds, read the first page in the storage.

In a possible implementation, the processing module 802 is further configured to:
upon determining that the version verification on the first page succeeds, delete a correspondence between the first page and the second version identifier from the mapping relationship.

In a possible implementation, the processing module 802 is further configured to:
before performing an operation of writing the first page of the version corresponding to the second version identifier into the storage, write the correspondence between the first page and the second version identifier into the mapping relationship.

In a possible implementation, the first read request includes a page identifier of the first page, and the mapping relationship includes correspondences between page identifiers of the plurality of pages and the latest versions of all the pages before the pages are persistently stored in the storage.

In a possible implementation, the processing module 802 is specifically configured to:
obtain the second version identifier corresponding to the first page from the mapping relationship stored in a memory.

In a possible implementation, the obtaining module 801 is further configured to obtain a second read request, where the second read request indicates to read data of a second page.

The processing module 802 is further configured to:
when the mapping relationship does not include a version identifier corresponding to the second page, determine that version verification on the second page succeeds.

The following describes a data processing apparatus according to an embodiment of this application. FIG. 9 is a diagram of a structure of a data processing apparatus according to an embodiment of this application. Specifically, the data processing apparatus 900 includes a receiver 901, a transmitter 902, a processor 903, and a storage 904 (where there may be one or more processors 903 in the data processing apparatus 900, and one processor is used as an example in FIG. 9). The processor 903 may include an application processor 9031 and a communication processor 9032. In some embodiments of this application, the receiver 901, the transmitter 902, the processor 903, and the storage 904 may be connected through a bus or in another manner.

The storage 904 may include a read-only memory and a random access memory, and provide instructions and data for the processor 903. A part of the storage 904 may further include a non-volatile random access memory (non-volatile random access memory, NVRAM). The storage 904 stores processor and operation instructions, an executable module, or a data structure, or a subset thereof, or an extended set thereof. The operation instructions may include various operation instructions for implementing various operations.

The processor 903 controls an operation of the data processing apparatus. In specific application, components of the data processing apparatus are coupled together by using a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 903, or may be implemented by the processor 903. The processor 903 may be an integrated circuit chip and has a signal processing capability. In an implementation process, the steps in the foregoing methods may be implemented by using a hardware integrated logic circuit in the processor 903 or by using instructions in a form of software. The processor 903 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 903 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the storage 904. The processor 903 reads information in the storage 904, and completes, in combination with hardware of the processor 903, the actions performed by the controller in the foregoing methods.

The receiver 901 may be configured to receive input digital or character information, and generate a signal input related to settings and function control of the data processing apparatus. The transmitter 902 may be configured to output the digital or character information through a first interface. The transmitter 902 may be further configured to send instructions to a disk group through the first interface, to modify data in the disk group.

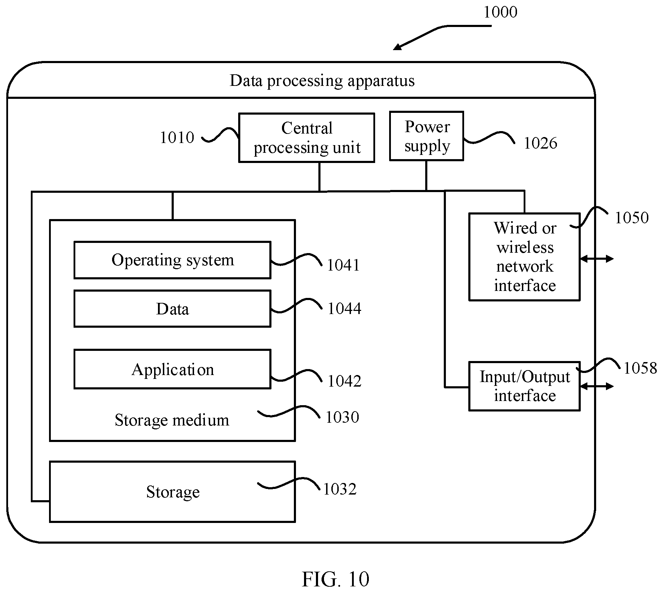

An embodiment of this application further provides a data processing apparatus. FIG. 10 is a diagram of a structure of a data processing apparatus according to an embodiment of this application. A data processing apparatus 1000 may vary significantly depending on configuration or performance, and may include one or more central processing units (central processing unit, CPU) 1010 (for example, one or more processors), a storage 1032, and one or more storage media 1030 (for example, one or more mass storage devices) storing an application 1042 or data 1044. The storage 1032 and the storage medium 1030 may perform transient storage or persistent storage. A program stored in the storage medium 1030 may include one or more modules (not shown in the figure), and each module may include a series of instruction operations for the data processing apparatus. Further, the central processing unit 1010 may be configured to communicate with the storage medium 1030, and perform, on the data processing apparatus 1000, a series of instruction operations in the storage medium 1030.

The data processing apparatus 1000 may further include one or more power supplies 1026, one or more wired or wireless network interfaces 1050, and one or more input/output interfaces 1058; or one or more operating systems 1041, such as Windows ServerTM, Mac OS XTM, UnixTM, LinuxTM, and FreeBSDTM.

In this embodiment of this application, the central processing unit 1010 is configured to perform an action performed by the controller in the foregoing embodiments.

An embodiment of this application further provides a computer program product. When the computer program product runs on a computer, the computer is enabled to perform steps performed by the foregoing data processing apparatus.

An embodiment of this application further provides a computer-readable storage medium. The computer-readable storage medium stores a program used for signal processing. When the program is run on a computer, the computer is enabled to perform steps performed by the foregoing data processing apparatus.

The data processing apparatus, the data processing apparatus, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the data processing apparatus performs the data processing method described in the foregoing embodiments, or a chip in the data processing apparatus performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected according to actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated storage, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a data processing apparatus, a network device, or the like) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a data processing apparatus, or a data center to another website, computer, data processing apparatus, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, like a data processing apparatus or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

## Claims

1. A data processing method, applied to a controller of a storage system, wherein the storage system further comprises a storage, and the method comprises:
obtaining a first read request, wherein the first read request indicates to read data of a first page;
obtaining a first version identifier and a second version identifier of the first page based on the first read request, wherein the first version identifier indicates a version of the first page that has been persistently stored in the storage, and the second version identifier indicates a latest version of the first page before the first page is persistently stored in the storage; and
verifying the first page based on a relationship between the first version identifier and the second version identifier.

2. The method according to claim 1, wherein the obtaining the first version identifier and the second version identifier of the first page based on the first read request comprises:
obtaining the first version identifier of the first page, and obtaining the second version identifier corresponding to the first page from a mapping relationship, wherein the mapping relationship comprises correspondences between a plurality of pages and latest versions of all the pages before the pages are persistently stored in the storage.

3. The method according to claim 1 or 2, wherein the verifying the first page based on the relationship between the first version identifier and the second version identifier comprises:
determining, when the relationship between the first version identifier and the second version identifier does not meet a preset condition, that the version verification on the first page fails; or
determining, when the relationship between the first version identifier and the second version identifier meets the preset condition, that the version verification on the first page succeeds.

4. The method according to any one of claims 1 to 3, wherein the controller and the storage correspond to a primary device, the storage system further comprises a standby device, and the method further comprises:
upon determining that the version verification on the first page fails, switching the primary device to a standby device, and triggering switching of the standby device to a primary device.

5. The method according to claim 4, wherein the first version identifier comprises a first log sequence number (lsn), and the second version identifier comprises a second log sequence number; and the determining, when the relationship between the first version identifier and the second version identifier does not meet the preset condition, that the version verification on the first page fails comprises:
when the first log sequence number is different from the second log sequence number, determining that the version verification on the first page fails.

6. The method according to any one of claims 1 to 5, wherein the method further comprises:
upon determining that the version verification on the first page fails, triggering alarm information, and reading the first page in the storage.

7. The method according to claim 6, wherein the first version identifier comprises the first log sequence number and a first cyclic redundancy check (crc), and the second version identifier comprises the second log sequence number and a second cyclic redundancy check; and
the determining, when the relationship between the first version identifier and the second version identifier does not meet the preset condition, that the version verification on the first page fails comprises:
when the first log sequence number is the same as the second log sequence number, and the first cyclic redundancy check is different from the second cyclic redundancy check, determining that the version verification on the first page fails.

8. The method according to any one of claims 1 to 7, wherein the method further comprises:
upon determining that the version verification on the first page succeeds, reading the first page in the storage.

9. The method according to any one of claims 2 to 8, wherein the method further comprises:
upon determining that the version verification on the first page succeeds, deleting a correspondence between the first page and the second version identifier from the mapping relationship.

10. The method according to any one of claims 2 to 9, wherein before the obtaining the first read request, the method further comprises:
before performing an operation of writing the first page of the version corresponding to the second version identifier into the storage, writing the correspondence between the first page and the second version identifier into the mapping relationship.

11. The method according to any one of claims 2 to 10, wherein the first read request comprises a page identifier of the first page, and the mapping relationship comprises correspondences between page identifiers of the plurality of pages and the latest versions of all the pages before the pages are persistently stored in the storage.

12. The method according to any one of claims 2 to 11, wherein the obtaining the second version identifier corresponding to the first page from the mapping relationship comprises:
obtaining the second version identifier corresponding to the first page from the mapping relationship stored in a memory.

13. The method according to any one of claims 2 to 12, wherein the method further comprises:
obtaining a second read request, wherein the second read request indicates to read data of a second page; and
when the mapping relationship does not comprise a version identifier corresponding to the second page, determining that version verification on the second page succeeds.

14. A data processing apparatus, wherein the apparatus comprises:
an obtaining module, configured to obtain a first read request, wherein the first read request indicates to read data of a first page; and
a processing module, configured to obtain a first version identifier and a second version identifier of the first page based on the first read request, wherein the first version identifier indicates a version of the first page that has been persistently stored in the storage, and the second version identifier indicates a latest version of the first page before the first page is persistently stored in the storage; and verify the first page based on a relationship between the first version identifier and the second version identifier.

15. The apparatus according to claim 14, wherein the processing module is specifically configured to:
obtain the first version identifier of the first page, and obtain the second version identifier corresponding to the first page from a mapping relationship, wherein the mapping relationship comprises correspondences between a plurality of pages and latest versions of all the pages before the pages are persistently stored in the storage.

16. The apparatus according to claim 14 or 15, wherein the processing module is specifically configured to:
determine, when the relationship between the first version identifier and the second version identifier does not meet a preset condition, that the version verification on the first page fails; or
determine, when the relationship between the first version identifier and the second version identifier meets the preset condition, that the version verification on the first page succeeds.

17. The apparatus according to any one of claims 14 to 16, wherein the controller and the storage correspond to a primary device, the storage system further comprises a standby device, and the processing module is further configured to:
upon determining that the version verification on the first page fails, switch the primary device to a standby device, and trigger switching of the standby device to a primary device.

18. The apparatus according to claim 17, wherein the first version identifier comprises a first log sequence number (lsn), the second version identifier comprises a second log sequence number, and when the first log sequence number is different from the second log sequence number, the version verification on the first page fails.

19. The apparatus according to any one of claims 14 to 18, wherein the processing module is further configured to:
upon determining that the version verification on the first page fails, trigger alarm information, and read the first page in the storage.

20. The apparatus according to claim 19, wherein the first version identifier comprises the first log sequence number and a first cyclic redundancy check (crc), and the second version identifier comprises the second log sequence number and a second cyclic redundancy check; and the processing module is specifically configured to:
when the first log sequence number is the same as the second log sequence number, and the first cyclic redundancy check is different from the second cyclic redundancy check, determine that the version verification on the first page fails.

21. The apparatus according to any one of claims 14 to 20, wherein the processing module is further configured to:
upon determining that the version verification on the first page succeeds, read the first page in the storage.

22. The apparatus according to any one of claims 15 to 21, wherein the processing module is further configured to:
upon determining that the version verification on the first page succeeds, delete a correspondence between the first page and the second version identifier from the mapping relationship.

23. The apparatus according to any one of claims 15 to 22, wherein the processing module is further configured to:
before performing an operation of writing the first page of the version corresponding to the second version identifier into the storage, write the correspondence between the first page and the second version identifier into the mapping relationship.

24. The apparatus according to any one of claims 15 to 23, wherein the first read request comprises a page identifier of the first page, and the mapping relationship comprises correspondences between page identifiers of the plurality of pages and the latest versions of all the pages before the pages are persistently stored in the storage.

25. The apparatus according to any one of claims 15 to 24, wherein the processing module is specifically configured to:
obtain the second version identifier corresponding to the first page from the mapping relationship stored in a memory.

26. The apparatus according to any one of claims 15 to 25, wherein the obtaining module is further configured to obtain a second read request, wherein the second read request indicates to read data of a second page; and
the processing module is further configured to:
when the mapping relationship does not comprise a version identifier corresponding to the second page, determine that version verification on the second page succeeds.

27. A computer storage medium, wherein the computer storage medium stores one or more instructions, and when the instructions are executed by one or more computers, the one or more computers are enabled to perform operations of the method according to any one of claims 1 to 13.

28. A computer program product, comprising computer-readable instructions, wherein when the computer-readable instructions are run on a computer device, the computer device is enabled to perform the method according to any one of claims 1 to 13.

29. A system, comprising at least one processor and at least one storage, wherein the processor and the storage are connected and communicate with each other through a communication bus;
the at least one storage is configured to store code; and
the at least one processor is configured to execute the code, to perform the method according to any one of claims 1 to 13.

30. A chip, comprising at least one processing unit and an interface circuit, wherein the interface circuit is configured to provide program instructions or data for the at least one processing unit, and the at least one processing unit is configured to execute the program instructions, to implement the method according to any one of claims 1 to 13.
